# DEMANDE DE BREVET EUROPEEN

(11) **EP 2 393 005 A1**
(43) Date de publication de la demande: **07.12.2011**
(21) Numéro de dépôt: 11154562.0
(22) Date de dépôt: 15.02.2011
(51) Int. Cl.: G06F 9/44

(54) **Gestion d'objets par système de traitement de l'information**

(30) Priorité: 01.06.2010 FR 1054235
(71) Demandeur: Alcatel Lucent, 75007 Paris (FR)
(72) Inventeur: Christophe, Benoit, 91620, Nozay (FR); Xu, Wenyi, 91620, Nozay (FR)
(74) Mandataire: Chaffraix, Sylvain

(57) **Abrégé**

Procédé pour agir sur un objet par l'intermédiaire d'une interface avec un système de traitement de l'information, comportant une étape de définition d'une représentation logique de l'objet, une étape de détermination par un utilisateur et de déclenchement d'une fonctionnalité de l'objet offerte par la représentation, et d'une étape de communication avec l'objet pour réaliser effectivement ladite fonctionnalité, le procédé est caractérisé en ce que la représentation logique comporte au moins un graphe d'états dans lequel les états du graphe représentent les états de l'objet et les transitions du graphe représentent des fonctionnalités de l'objet, et en ce que les fonctionnalités offertes comprennent les fonctionnalités présentes sur les transitions sortantes de l'état courant du graphe.

## Description

La présente invention est relative à l'interaction d'un système de traitement de l'information avec des objets physiques.

Il existe des propositions visant à permettre à un utilisateur d'un système de traitement de l'information d'interagir sur des objets physiques pouvant équiper son environnement. Ces objets physiques peuvent être des objets personnels comme par exemple des équipements électroménagers (fours, réfrigérateurs...), des équipements audio-vidéo (téléviseurs, chaines Hi-Fi...), ou tout autre équipements (lampes, chauffage...) Il peut également s'agir d'équipements de son environnement professionnel, d'équipements publics...

Les systèmes de traitement de l'information peuvent par exemple être des terminaux de communication qui, via une interface web, permettent d'utiliser les fonctionnalités de ces objets. Il peut par exemple s'agir d'éteindre une lampe à distance ou de lancer l'enregistrement d'un film passant sur une chaîne de télévision via son téléphone mobile, etc.

Il existe, dans l'état de la technique, plusieurs propositions visant plus ou moins à résoudre ce besoin.

Une proposition est la solution EPCGlobal d'Audio-ID labs. Elle repose sur l'utilisation d'identifiants (ou « tags ») RFID et de capteurs de présence pour détecter la présence des objets et notifier les utilisateurs de la localisation des objets auxquels ils ont souscrits. Ces informations sont rendus accessibles sur une interface web.

Toutefois, cette solution ne permet pas de manipuler les objets et d'accéder à leurs fonctionnalités.

Une autre proposition est la plateforme « Touchatag » qui repose sur l'idée d'associer des actions à des tags RFID. En présentant un tag RFID devant un capteur, une action peut automatiquement être déclenchée parla plateforme. Cette solution permet donc beaucoup de liberté sur la programmation des actions, mais elle ne gère pas les objets proprement dits et de ce fait comporte de nombreuses limites. Elle ne peut pas proposer, par exemple, la liste des actions possibles à l'utilisateur via une interface web ; elle ne peut pas non plus gérer correctement quelles actions sont possibles ou non en fonction de l'état de l'objet.

L'initiative Yaler, décrite sur le site web www.yaler.org, consiste à constituer une passerelle entre des objets connectés au web et l'interface web des utilisateurs. Elle permet à ces utilisateurs d'accéder aux fonctionnalités des objets mais soufre de la nécessité de disposer de cette passerelle qui forme donc à la fois un point d'engorgement potentiel et une vulnérabilité du système.

En outre, cette solution considère les objets comme des « services », c'est-à-dire comme un ensemble de fonctionnalités continuellement offertes à l'utilisateur.

L'initiative « Web of Things » décrite sur le site www.webofthings.com soufre de la même hypothèse de base qui considère les objets physiques comme des services accessibles via le web.

Le but de l'invention consiste à améliorer substantiellement la situation. Selon l'invention, les objets sont de nature différente des services en ce sens que leurs fonctionnalités ne sont pas continuellement disponibles. Leur disponibilité est en effet fonction de l'état dans lequel se trouve l'objet.

Par exemple, la fonctionnalité « pause d'un lecteur de CD ou de DVD n'est accessible que si l'objet est en train de lire un média.

Pour ce faire, l'invention a pour objet un procédé pour agir sur un objet par l'intermédiaire d'une interface avec un système de traitement de l'information, comportant
- une étape de définition d'une représentation logique de l'objet,
- une étape de détermination par un utilisateur et de déclenchement d'une fonctionnalités de cet objet offerte par la représentation, et
- une étape de communication avec l'objet pour réaliser effectivement la fonctionnalité en question.

Le procédé selon l'invention est novateur en ce que la représentation logique comporte au moins un graphe d'états dans lequel les états du graphe représentent les états de l'objet et les transitions du graphe représentent des fonctionnalités de l'objet, et en ce que ces fonctionnalités offertes comprennent les fonctionnalités présentes sur les transitions sortantes de l'étant courant du graphe.

Ainsi, l'association de graphes d'états aux objets représentés dans le système de traitement de l'information permet de mieux rendre compte de la nature même des objets. Il devient possible de modéliser finement leur comportement et de s'assurer que l'objet est dans l'état approprié avant de déclencher une fonctioinalité.

Cela peut se faire par exemple, en proposant à l'utilisateur que les fonctionnalité correspondant à leur état courant.

Il est également possible d'offrir à l'utilisateur des fonctionnalités supplémentaires. Le procédé peut alors comprendre, en cas de détermination d'une de ces fonctionnalité supplémentaire, une étape de détermination d'un parcours dans le ou les graphes d'états jusqu'à un état ayant la fonctionnalités supplémentaire en question sur une transition sortante, et de déclenchement automatique des fonctionnalités permettant le suivi de ce parcours.

Les transitions du ou des graphes d'état peuvent être associés à des poids, ces poids étant utilisés pour déterminer le parcours parmi plusieurs parcours possibles.

La représentation logique peut comporter une pluralité de graphes d'états, chacun correspondant à une relation entre l'utilisateur et l'objet, et comportant une étape de détermination de la relation afin de déterminer un graphe parmi la pluralité de graphes.

L'étape de détermination par un utilisateur- peut comporter le traitement de cette détermination par au moins une file d'attente avant le déclenchement de la fonctionnalité. Une file d'attente peut être prévue pour chacune des relations et des priorités peuvent être affectées aux relations (et par suite, aux files d'attente).

L'invention a également pour objet un terminal et un serveur de traitement de l'information prévus pour le déploiement de ce procédé et de ses mises en oeuvre.

L'invention, ses avantages et ses caractéristiques apparaitront de façon plus claire dans la description qui va suivre en liaison avec les figures annexées.
La figure 1 représente un contexte de mise en oeuvre possible de l'invention.
La figure 2 schématise ne représentation d'un objet utilisant un graphe d'états.

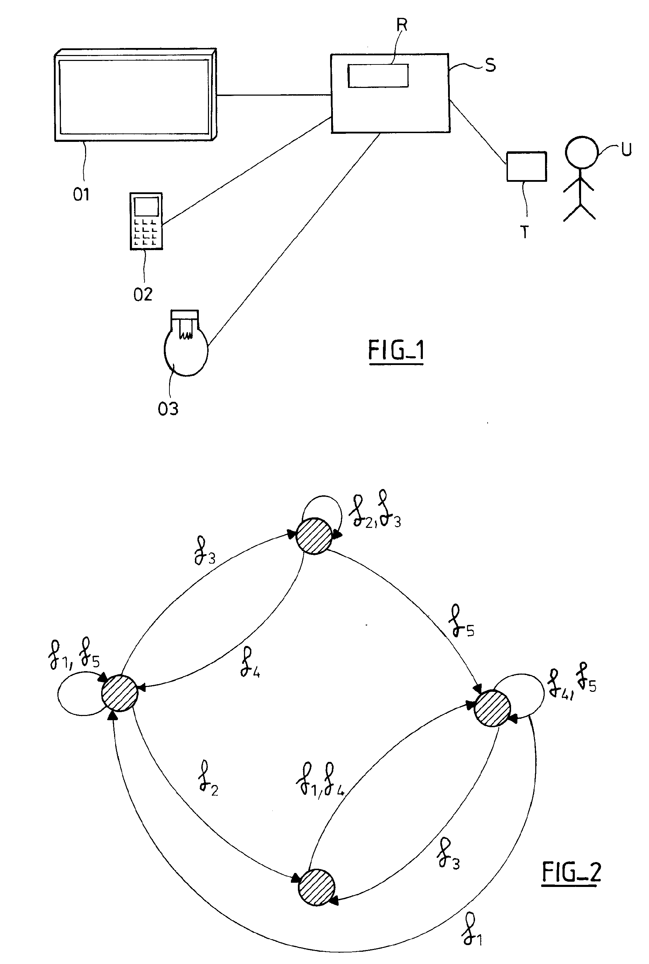

Dans l'exemple de mise en oeuvre illustré par la figure 1, l'invention permet à un utilisateur U d'agir sur des objets O1, O2, O3 au travers d'un terminal de communication T comportant une interface avec un système de traitement de l'information. Ce système de traitement de l'information peut comporter différents équipements et dispositifs logiciels.

Il peut n'être constitué que des dispositifs embarqués dans le terminal de communication T.

Il peut, comme dans l'exemple de la figure 1, comporter un serveur S connecté au terminal T et aux objets O1, O2, O3.

Le terminal T peut comporter une interface web de type navigateur et communiquer avec le serveur S par les protocoles habituel de la technologie web comme HTTP (HyperText Transfer Protocol) ou par des applications ou applets Java etc.

L'utilisation d'un serveur S comme dans l'exemple de la figure 1 permet de mettre en oeuvre l'invention de façon centralisée. Ainsi qu'il sera plus tard explicité, il est alors possible d'agir sur un même objet à partir de plusieurs terminaux en gérant de façon optimale les éventuels conflits.

Le système de traitement de l'information S comporte un ensemble R de représentations logiques des objets. Le procédé selon l'invention comporte donc une étape initiale de définition de ces représentations logiques.

Selon l'invention, la représentation logique d'un objet comporte au moins un graphe d'états. Un tel graphe est représenté en figure 2.

Les états A, B, C, D représentent des états distincts de l'objet modélisé. Par exemple, pour le poste téléphonique O2, il peut s'agir des états « en attente », « en conversation téléphonique », « en enregistrement d'un message », « en consultation de messages ». Cet exemple est purement indicatif et les états doivent être déterminés selon le fonctionnement précis de l*'*objet.

Les états sont reliés entre eux par des transitions (marquées par des flèches orientées sur la figurer Ces transitions représentent les fonctionnalités de l'objet.

Par exemple la transition de l'état B vers l'état C montre qu'une même transition peut représenter plusieurs fonctionnalités, ici les fonctionnalités f1 et f2.

Cela peut être par exemple le cas pour un poste téléphonique O2 dans l'état « consultation des messages » qui passe dans l'état « en attente» à la suite du déclenchement de la fonctionnalité «raccrochage » et de la fonctionnalité « fin de consultation ».

A partir d'un état donné; par exemple l'état B, deux situations peuvent être considérées :
- certaines fonctionnalités font passer l'objet dans un autre état : c'est par exemple le cas de la fonctionnalité f1 qui fait passer l'objet dans l'état D ;
- certaines fonctionnalités maintiennent l'objet dans le même état : c'est par exemple le cas de la fonctionnalité f2.

Dans l'exemple d'un lecteur de média (CD, DVD...), la fonctionnalité « début de lecture » fait passer l'objet de l'état « pause » ou « en veille » vers un état « lecture » tandis que la fonctionnalité « monter le volume » laisse l'objet dans le même état.

En outre, une même fonctionnalité peut être accessible depuis plusieurs états. C'est ainsi le cas de la fonctionnalité f2 qui est accessible depuis les états A, B et C. Par exemple, pour un lecteur de média, la fonctionnalité « monter le volume » peut être accessible depuis l'état « pause » ou depuis l'état « lecture ».

Par ailleurs, il peut être prévu que la représentation logique d'un objet comporte plusieurs graphes d'états. Chacun de ces graphes d'états peut correspondre à une relation possible entre l'utilisateur et l'objet.

Ces relations peuvent être par exemples : administrateur, propriétaire, ami (ou famille, collègue etc. en fonction du contexte) ou anonyme. D'autres relations sont bien sûr possibles. La suite de la description se base sur un groupe de 4 relations distinctes mais des groupes de nombres différents de relations sont possibles tout en restant dons le cadre de l'invention.

Ces relations ou rôle représentent des liens associant l'objet et l'utilisateur et peuvent correspondre à des droits différents sur l'objet.

Dans certains cas, les relations « propriétaire » et « administrateur » peuvent être confondues, mais il peut être intéressant dans certaines situations de les distinguer. Par exemple, dans un milieu professionnel, un administrateur peut avoir accès à certaines fonctionnalités inaccessibles à son propriétaire. En outre, le même ordinateur peut éventuellement être utilisé par des collègues mais avec un accès restreint à certaines fonctionnalités. Certaines fonctionnalités peuvent en outre être accessibles à toute personne (relation « anonyme ») ; ce peut par exemple être le cas des fonctionnalités « marche » et « arrêt ».

A chaque relation correspond donc un sous-ensemble différents des états et fonctionnalités possibles et donc un graphe d'état distinct.

Selon une mise en oeuvre de l'invention, l'utilisation d'un objet déclenche la détermination de la relations entre l'utilisateur U et l'objet O1, O2, O3. En fonction de cette relations, le graphe d'états approprié est déterminé parmi l'ensemble des graphes contenus dans la représentation logique de cet objet.

Il peut en outre être prévu de disposer d'au moins une file d'attente, notamment une file d'attente par relation et graphe d'états. Cette (ou ces) files d'attentes permettent de gérer les situation où plusieurs utilisateurs accèdent à un même objet.

Chaque file d'attente peut correspondre à une modèle « premier arrivé, premier servi » (FIFO pour « first in first out » en anglais). Mais d'autres mécanismes peuvent nuancer ce modèle. Par exemple, il est possible de prendre en compte la proximité géographique et de donner une priorité plus importante à celui qui est plus près de l'objet qu'à un outre utilisateur souhaitant le piloter à distance.

Entre les files d'attente, des priorités peuvent être précisées également, Par exemple, la relation « propriétaire » peut être plus prioritaire que la relation « ami» et la file d'attente correspondante recevoir une prééminence de traitement.

Ce mécanisme permet de gérer la situation où des fonctionnalités différentes sont activées de façon concurrente : le type de relations (propriétaire, ami...), la proximité géographique ou d'autres paramètres encore permettent de donner la priorité à l'une ou l'autre des requêtes.

Il est toutefois à noter que certaines fonctionnalités peuvent être déclenchées de façon concurrente sans situation conflictuelle. En effet, certains objets, dans certains états, peuvent gérer des fonctionnalités de façon parallèle. Par exemple, le téléviseur O1 peut changer de chaîne tout en changeant le volume sonore.

Comme il a été dit précédemment, seul le sous-ensemble des fonctionnalités correspondant à l'état courant est directement accessible aux utilisateurs.

Il peut par ailleurs être prévu d'offrir aux utilisateurs des fonctionnalités supplémentaires par rapport à celles-ci.

Par exemple, l'interface web (ou navigateur) peut représenter certaines ou toutes les fonctionnalités de l'objet.

Dans le cas où l'utilisateur détermine, sur l'interface web, une de ces fonctionnalités supplémentaires, le procédé de l'invention détermine alors un parcours dans le graphe d'état jusqu'à un état possédant la fonctionnalité en question sur une transition sortante.

Sur l'exemple de la figure 2, on suppose que l'état courant est l'état A et que la fonctionnalité choisie est la fonctionnalité f4. Cette fonctionnalité n'appartient à aucune des transitions sortant de l'état A. C'est donc une « fonctionnalité supplémentaire » ainsi que définie ci-dessus.

Le système de traitement de l'information peut alors déterminer un ou plusieurs parcours menant, à partir de l'état A, à un état qui possède f4 sur une transition sortante.

Ces parcours sont A → C et A → B puisque C et B possèdent f4 comme fonctionnalité sur une transition sortante.

Le système S peut alors déclencher automatiquement les fonctionnalités permettant de suivre ce parcours.

Autrement dit, le système S détermine quelle fonctionnalité se situe sur les transitions du parcours et les appliquer les unes après les autres.

Par exemple, il peut appliquer la fonctionnalité f3 pour aller vers l'état C ou bien la fonctionnalité f2 pour aller vers l'état B.

Le système S peut choisir l'un de ces chemins de façon arbitraire ou bien à partir d'une heuristique prédéterminé, ou bien demander à l'utilisateur de choisir.

L'heuristique peut se baser sur une notion de coût ou de contrainte. Par exemple, des coûts peuvent être associés aux transitions et le choix portera sur le parcours de moindre coût.

Ces coûts peuvent représenter différentes critères comme la consommation d'énergie, un impact d'usure de l'objet (par exemple, éteindre et rallumer un appareil peut être associé à un coût élevé), le temps pour réaliser la fonctionnalité etc.

Par cette association d'une machine à états aux objets, invention permet en outre de faciliter la gestion de la coopération d'objets. Il peut être proposé un outil de supervision d'objets pour permettre une telle coopération.

Par coopération, nous entendons une application ou un « mash-up » composé(e) de plusieurs objets interagissant les uns avec les autres.

Ce module permet la gestion de dépendances simples entre objets. En s'appuyant sur la représentation de chaque objet, ce module est capable de savoir quelles sont les données qu'un objet donné attend et quels sont les objets, impliqué dans une application composite, capable de les lui fournir.

Ce module est donc capable de gérer la mise en attente de l'utilisation d'un objet, et de provoquer le déclenchement des fonctionnalités appartenant à d'autres objets, requises pour l'exécution dudit objet. Ce module est enfin capable de faire la différence entre :
- Faire attendre un objet jusqu'à ce que tous les objets impliquant sa réalisation aient été invoqué, et
- Faire attendre un objet jusqu'à ce qu'un sous groupe d'objets, nécessaire mais suffisant, ait été invoqué,

## Revendications

1. Procédé pour agir sur un objet physique par l'intermédiaire d'une interface avec un système de traitement de information, comportant une étape de définition d'une représentation logique dudit objet physique, une étape de détermination par un utilisateur et de déclenchement d'une fonctionnalité dudit objet physique offerte par ladite représentation, et une étape de communication avec ledit objet physique pour réaliser effectivement ladite fonctionnalité, ledit procédé est **caractérisé en ce que** ladite représentation logique comporte au moins un graphe d'états dans lequel les états dudit graphe représentent les états dudit objet physique et les transitions dudit graphe représentent des fonctionnalités dudit objet physique, et **en ce que** lesdites fonctionnalités offertes comprennent les fonctionnalités présentes sur les transitions sortantes de l'état courent dudit graphe.

2. Procédé selon la revendication précédente, dans laquelle des fonctionnalités supplémentaires sont offertes audit utilisateur et comprenant, en cas de détermination d'une fonctionnalité supplémentaire par ledit utilisateur une étape de détermination d'un parcours dans ledit ou moins un graphe d'état jusqu'à un état ayant ladite fonctionnalité supplémentaire, sur une transition sortante, et de déclenchement automatique des fonctionnalités permettant le suivi dudit parcours.

3. Procédé selon la revendication précédente, dans lequel les transitions dudit au moins un graphe d'état sont associés à des poids, lesdits poids étant utilisés pour déterminer ledit parcours parmi plusieurs parcours possibles.

4. Procédé selon l'une des revendications précédentes dans lequel ladite représentation logique comporte une pluralité de graphes d'états, chacun correspondant à une relation entre ledit utilisateur et ledit objet, et comportant une étape de détermination de ladite relation afin de déterminer un graphe parmi ladite pluralité de graphes.

5. Procédé selon la revendication précédente, dans lequel ladite relation est comprise dans un groupe comprenant « administrateur », « propriétaire », « ami/famille », « anonyme ».

6. Procédé selon l'une des revendications précédentes, dans lequel ladite étape de détermination par un utilisateur comporte le traitement de ladite détermination par au moins une file d'attente avant ledit déclenchement de ladite fonctionnalité.

7. Procédé selon la revendication 6 et l'une des revendications 4 ou 5, dans lequel une file d'attente est prévue pour chacune desdites relations, et dans laquelle des priorités sont affectées auxdites relations.

8. Terminal de communication pour la mise en oeuvre d'un procédé selon l'une des revendications précédentes.

9. Serveur de traitement de l'information pour la mise en oeuvre d'un procédé selon l'une des revendications 1 à 7.
